# EUROPEAN PATENT APPLICATION

(11) **EP 1 411 672 A2**
(43) Date of publication of application: **21.04.2004**
(21) Application number: 03022633.6
(22) Date of filing: 06.10.2003
(51) Int. Cl.: H04L 12/28

(54) **Method and wireless device for handling a triggered reset of a radio link control entity in a wireless communications system**

(30) Priority: 17.10.2002 US 65435
(71) Applicant: ASUSTeK Computer Inc., Peitou, Taipei City (TW)
(72) Inventor: Wu, Chih-Hsiang, Shindian City, Taipei (TW)
(74) Representative: TER MEER STEINMEISTER & PARTNER GbR

(57) **Abstract**

A method for handling a triggered reset of a radio link control (RLC) entity in a wireless communications system includes the RLC entity initiating an RLC reset procedure by causing a reset protocol data unit (RESET PDU) to be transmitted and starting a Timer_RST timer, an upper layer stopping the RLC entity prior to the RLC entity receiving a RESET ACK PDU in response to the reset procedure, delaying a triggered reset of the RLC entity caused by expiration of the Timer_RST timer until after the RLC entity has been continued by the upper layer, and the RLC entity processing the triggered reset after the RLC entity is continued by the upper layer.

## Description

### BACKGROUND OF THE INVENTION

### 1. Field of the Invention

The present invention relates to a method for handling a triggered reset of a radio link control (RLC) entity, and more specifically, to a method for handling a triggered reset of a stopped RLC entity in a wireless communications system.

### 2. Description of the Prior Art

Technological advances have moved hand in hand with more demanding consumer expectations. Devices that but ten years ago were considered cutting edge are today obsolete. These consumer demands in the marketplace spur companies towards innovation. The technological advances that result only serves to further raise consumer expectations. Presently, portable wireless devices, such as cellular telephones, personal digital assistants (PDAs), notebook computers, etc., are a high-growth market. However, the communications protocols used by these wireless devices are quite old. Consumers are demanding faster wireless access with greater throughput and flexibility. This has placed pressure upon industry to develop increasingly sophisticated communications standards. The 3rd Generation Partnership Project (3GPP) is an example of such a new communications protocol.

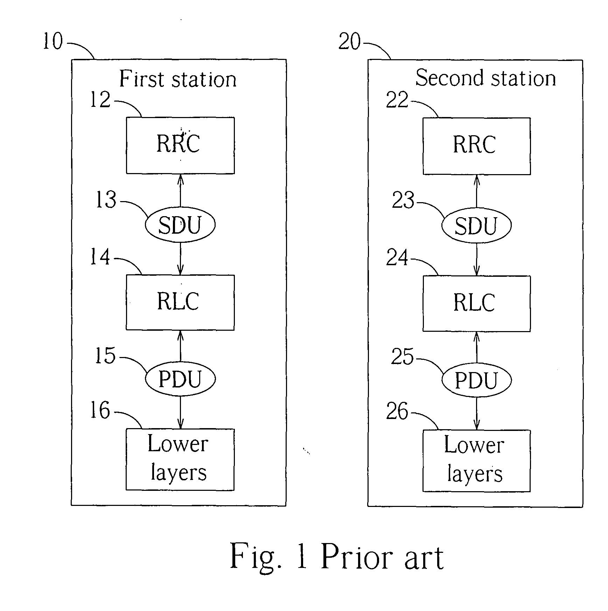

Please refer to Fig. 1. Fig. 1 is a simplified block diagram of the prior art communications model. In a typical wireless environment, a first station 10 is in wireless communications with one or more second stations 20. The first station 10 is comprised of a radio resource control (RRC) 12, a radio link control (RLC) entity 14, and lower layers 16 which are below the RLC 14. The RRC 12 can deliver messages to the RLC 14 through service data units (SDUs) 13. The SDUs 13 may be of any size, and hold data that the RRC 12 wishes delivered to the second station 20. The RLC 14 composes the SDUs 13 into one or more protocol data units (PDUs) 15. Each PDU 15 of the RLC 14 is delivered to the lower layers 16. The lower layers 16 include the physical layer, which is in charge of transmitting data to the second station 20.

The second station 20 shown has exactly the same basic structure as the first station 10. The second station 20 also includes an RRC 22, an RLC 24, and lower layers 26. Just as with the first station 10, the second station 20 uses the RRC 22 to transmit SDUs 23 to the RLC 24, and uses the RLC 24 to transmit PDUs 25 to the lower layers 26. The data transmitted by the first station 10 is received by lower layers 26 of the second station 20 and reconstructed into one or more PDUs 25, which are passed up to the RLC 24. The RLC 24 receives the PDUs 25 and from them assembles one or more SDUs 23, which are then passed up to the RRC 22. The RRC 22, in turn, converts the SDUs 23 back into messages which should be identical to the original messages that was generated by the first station 10. In communication systems, the terms SDU and PDU have broad meanings. For purposes of the following disclosure, the term "SDU" is used to indicate SDUs passed from the RRC to the RLC, and the term "PDU" should be understood as PDUs passed from the RLC to lower layers. In addition, for simplicity the following disclosure will be written from the perspective of the first station 10, unless otherwise noted.

Resetting and stopping the RLC 14 is defined by the 3^{rd} Generation Partnership Project (3GPP) specification 3GPP TS 25 .322 V3 .10 . 0 "RLC Protocol Specification", which is included herein by reference. According to the current RLC stop function and RLC continue function for both acknowledged mode and unacknowledged mode, RLC timers are not affected when the RLC entity 14 is stopped. When the RLC 24 is receiving a heavy load of data units, the RRC 12 or other upper layers may be indicated to stop the RLC 14 in order to prevent overloading of the second station 20. When the RLC entity 14 is stopped, triggered polling functions and status transmissions are delayed until the RLC entity 14 is continued. Unfortunately, the current 3GPP specification does not specify how to handle a triggered reset while the RLC entity is stopped.

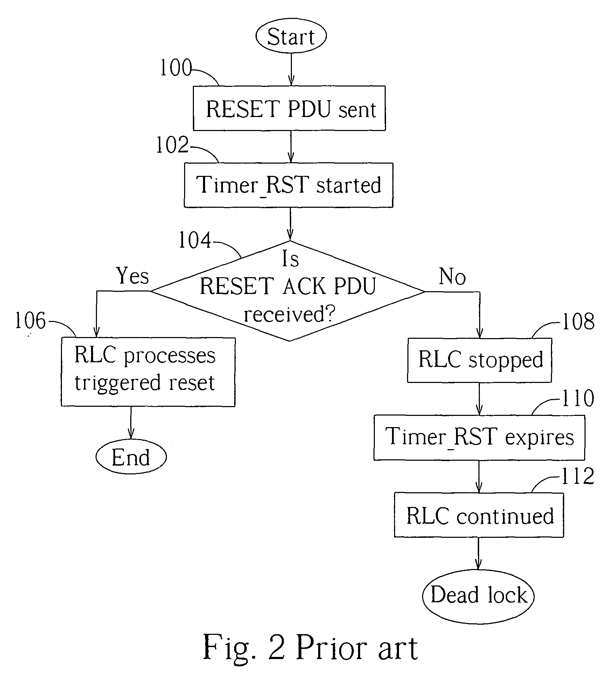

To more clearly understand the problem, please refer to Fig.2. Fig.2 is a flowchart illustrating resetting a stopped RLC entity according to the prior art. This problem occurs when a RESET PDU is sent by the RLC entity 14, and the RLC 14 is stopped before the RLC 14 receives a RESET ACK PDU.
- Step 100:: The RLC 14 of the first station 10 sends a RESET PDU to the second station 20;
- Step 102 :: A Timer_RST timer is started when the lower layers 16 indicate successful or unsuccessful transmission of the RESET PDU to the RLC 14. When the Timer_RST timer expires, another RESET PDU is sent from the RLC 14 to the second station 20;
- Step 104:: Determine if the RLC 14 has received a corresponding RESET ACK PDU from the second station 20. If so, go to step 106. If not, go to step 108;
- Step 106:: Since the RLC 24 of the second station 20 has acknowledged the RESET PDU, the RLC 14 processes a triggered reset;
- Step 108:: The RLC 14 is stopped before receiving a RESET ACK PDU from the second station 20. Because the RLC 14 is stopped, the RLC 14 is not allowed to submit any RLC PDUs to the lower layers 16 or to receive any RLC PDUs from the lower layers 16;
- Step 110:: The Timer_RST timer expires. However, since the RLC 14 is stopped, the RLC 14 cannot submit a RESET PDU. Therefore, the Timer_RST timer is not restarted; and
- Step 112 :: The RLC 14 is continued by the RRC 12 or other upper layers. Because the Timer_RST timer has expired and not been restarted, the RLC 14 cannot complete a reset procedure, and the RLC 14 experiences deadlock.

As can be seen from the flowchart in Fig . 2 , deadlock occurs because the Timer_RST timer expires while the RLC 14 is stopped, and because the RLC 14 is not allowed to submit any RLC PDUs to the lower layers 16 or to receive any RLC PDUs from the lower layers 16. Therefore, after the RLC 14 is continued, there is no way to reset the RLC 14, and deadlock occurs.

### SUMMARY OF THE INVENTION

It is therefore a primary objective of the claimed invention to provide a method for handling a triggered reset of a stopped RLC entity in a wireless communications system in order to solve the above-mentioned problems.

According to the claimed invention, a method for handling a triggered reset of a radio link control (RLC) entity in a wireless communications system includes the RLC entity initiating an RLC reset procedure by causing a reset protocol data unit (RESET PDU) to be transmitted and starting a Timer_RST timer, an upper layer stopping the RLC entity prior to the RLC entity receiving a RESET ACK PDU in response to the reset procedure, delaying a triggered reset of the RLC entity caused by expiration of the Timer_RST timer until after the RLC entity has been continued by the upper layer, and the RLC entity processing the triggered reset after the RLC entity is continued by the upper layer.

It is an advantage of the claimed invention that the triggered reset of the RLC entity caused by expiration of the Timer_RST timer is delayed until after the RLC entity has been continued by the upper layer, in order to prevent the RLC entity from experiencing deadlock.

These and other objectives of the claimed invention will no doubt become obvious to those of ordinary skill in the art after reading the following detailed description of the preferred embodiment, which is illustrated in the various figures and drawings.

### BRIEF DESCRIPTION OF THE DRAWINGS

Fig.1 is a simplified block diagram of the prior art communications model.
Fig.2 is a flowchart illustrating resetting a stopped RLC entity according to the prior art.
Fig.3 is a flowchart illustrating resetting a stopped RLC entity according to a first embodiment of the present invention.
Fig.4 is a flowchart illustrating resetting a stopped RLC entity according to a second embodiment of the present invention.
Fig.5 is a flowchart illustrating resetting a stopped RLC entity according to a third embodiment of the present invention .

### DETAILED DESCRIPTION OF THE PREFERRED EMBODIMENT

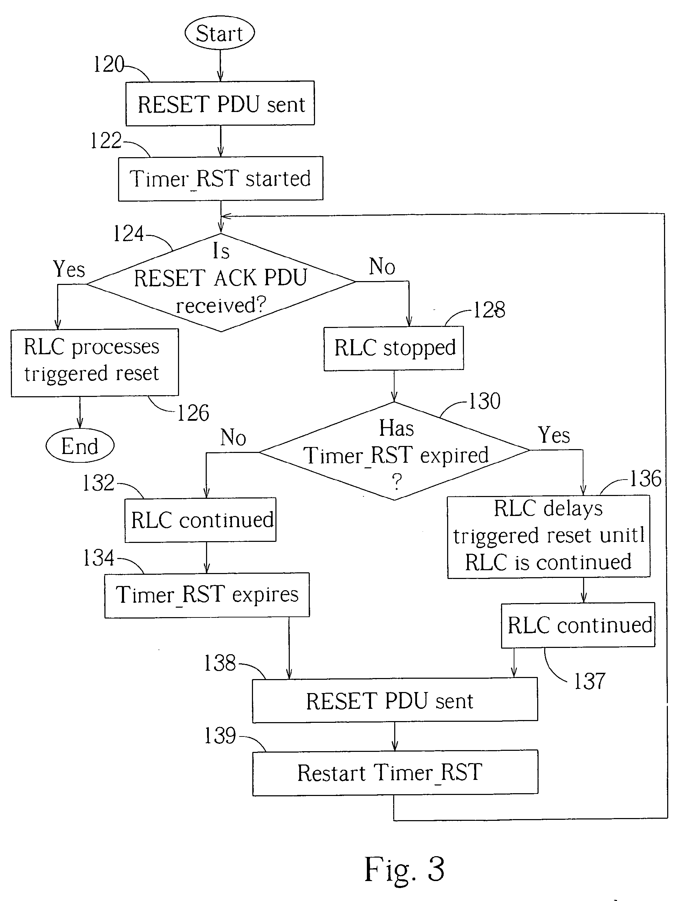

Please refer to Fig.3. Fig.3 is a flowchart illustrating resetting a stopped RLC entity according to a first embodiment of the present invention. The first embodiment of the present invention prevents deadlock of the RLC entity 14 by delaying a triggered reset until after the RLC entity 14 is continued.
- Step 120:: The RLC 14 of the first station 10 sends a RESET PDU to the second station 20;
- Step 122 :: The Timer_RST timer is started when the lower layers 16 indicate successful or unsuccessful transmission of the RESET PDU to the RLC 14. When the Timer_RST timer expires, another RESET PDU is sent from the RLC 14 to the second station 20;
- Step 124:: Determine if the RLC 14 has received a corresponding RESET ACK PDU from the second station 20. If so, go to step 126. If not, go to step 128;
- Step 126:: Since the RLC 24 of the second station 20 has acknowledged the RESET PDU, the RLC 14 processes a triggered reset;
- Step 128:: The RLC 14 is stopped before receiving a RESET ACK PDU from the second station 20. Because the RLC 14 is stopped, the RLC 14 is not allowed to submit any RLC PDUs to the lower layers 16 or to receive any RLC PDUs from the lower layers 16;
- Step 130:: Determine if the Timer_RST timer has expired. If so, go to step 136. If not go to step 132;
- Step 132 :: The RLC 14 is continued by the RRC 12 or other upper layers;
- Step 134:: The Timer_RST timer expires. Go to step 138;
- Step 136:: Since the Timer_RST timer expired when the RLC 14 was stopped, a triggered reset of the RLC 14 caused by the expiration of the timer is delayed until after the RLC 14 is continued;
- Step 137:: The RLC 14 is continued by the RRC 12 or other upper layers;
- Step 138:: Now that the RLC 14 has been continued, the RLC 14 of the first station 10 sends a RESET PDU to the second station 20; and
- Step 139:: The Timer_RST timer is restarted when the lower layers 16 indicate successful or unsuccessful transmission of the RESET PDU to the RLC 14; go to step 124.

In summary, the flowchart in Fig.3 states that if the Timer_RST timer expired when the RLC 14 was stopped, a triggered reset of the RLC 14 caused by the expiration of the timer is delayed until after the RLC 14 is continued. This means that even though the Timer_RST timer expires when the RLC 14 is stopped and could not generate a RESET PDU, the present invention method allows the RLC 14 to wait until the RLC 14 is continued before generating a RESET PDU. In this way, the RLC 14 is properly reset, and deadlock does not occur.

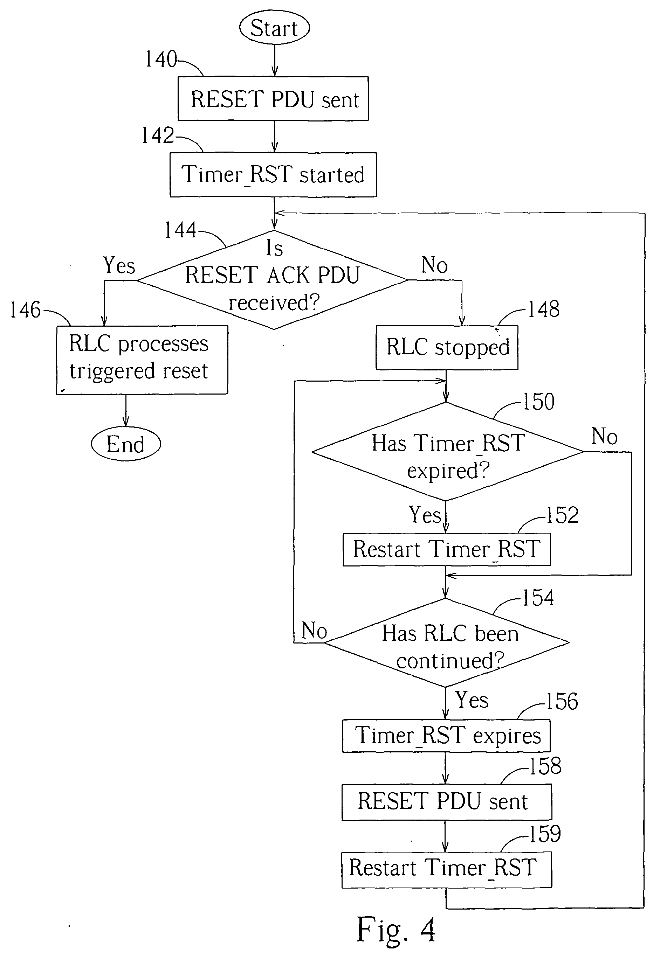

Please refer to Fig.4. Fig.4 is a flowchart illustrating resetting a stopped RLC entity according to a second embodiment of the present invention. The second embodiment of the present invention prevents deadlock of the RLC entity 14 by restarting the Timer_RST timer if the timer expires while the RLC 14 is stopped by an upper layer.
- Step 140:: The RLC 14 of the first station 10 sends a RESET PDU to the second station 20;
- Step 142 :: The Timer_RST timer is started when the lower layers 16 indicate successfulor unsuccessful transmission of the RESET PDU to the RLC 14. When the Timer_RST timer expires, another RESET PDU is sent from the RLC 14 to the second station 20;
- Step 144:: Determine if the RLC 14 has received a corresponding RESET ACK PDU from the second station 20. If so, go to step 146. If not, go to step 148;
- Step 146:: Since the RLC 24 of the second station 20 has acknowledged the RESET PDU, the RLC 14 processes a triggered reset;
- Step 148:: The RLC 14 is stopped before receiving a RESET ACK PDU from the second station 20. Because the RLC 14 is stopped, the RLC 14 is not allowed to submit any RLC PDUs to the lower layers 16 or to receive any RLC PDUs from the lower layers 16;
- Step 150:: Determine if the Timer_RST timer has expired. If so, go to step 152. If not go to step 154;
- Step 152:: Since the Timer_RST timer expired while the RLC 14 was stopped, the Timer_RST timer is restarted;
- Step 154:: Determine if the RLC has been continued by upper layers. If so, go to step 156. If not go back to step 150;
- Step 156:: The Timer_RST timer expires;
- Step 158:: Now that the RLC 14 has been continued, the RLC 14 of the first station 10 sends a RESET PDU to the second station 20; and
- Step 159:: The Timer_RST timer is restarted when the lower layers 16 indicate successful or unsuccessful transmission of the RESET PDU to the RLC 14; go to step 144.

In summary, the flowchart in Fig.4 states that if the Timer_RST timer expired when the RLC 14 was stopped, the Timer_RST timer is restarted so as to wait until the RLC 14 is continued before generating a RESET PDU. In this way, the RLC 14 is properly reset, and deadlock does not occur.

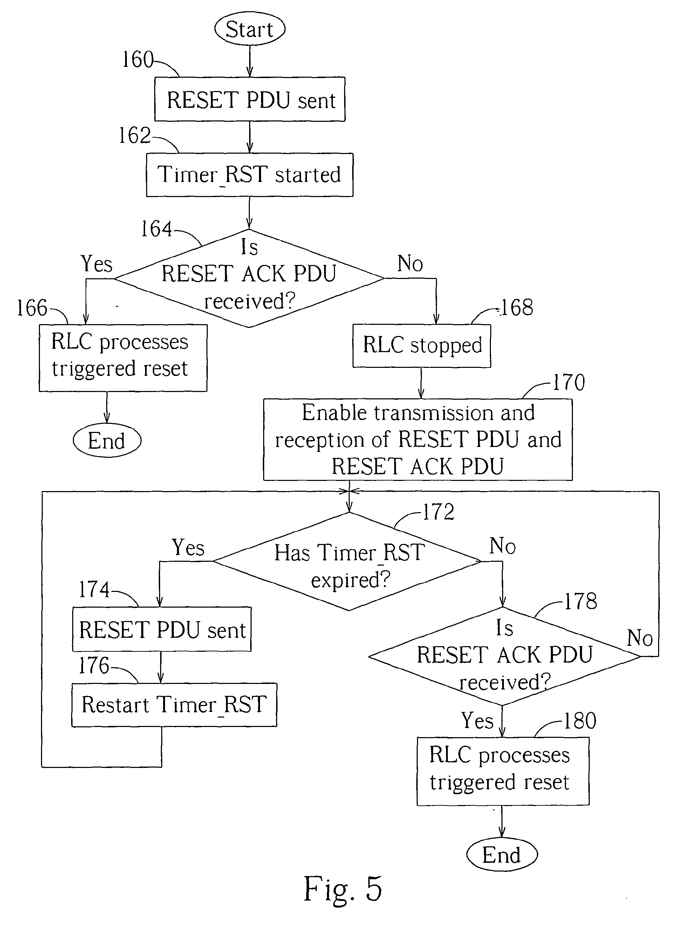

Please refer to Fig.5. Fig.5 is a flowchart illustrating resetting a stopped RLC entity according to a third embodiment of the present invention. The third embodiment of the present invention prevents deadlock of the RLC entity 14 by enabling the RLC entity 14 to receive RESET ACK PDUs, and enabling the RLC entity 14 to transmit RESET PDUs while the RLC entity 14 is stopped by an upper layer.
- Step 160:: The RLC 14 of the first station 10 sends a RESET PDU to the second station 20;
- Step 162 :: The Timer_RST timer is started when the lower layers 16 indicate successful or unsuccessful transmission of the RESET PDU to the RLC 14. When the Timer_RST timer expires, another RESET PDU is sent from the RLC 14 to the second station 20;
- Step 164:: Determine if the RLC 14 has received a corresponding RESET ACK PDU from the second station 20. If so, go to step 166. If not, go to step 168;
- Step 166:: Since the RLC 24 of the second station 20 has acknowledged the RESET PDU, the RLC 14 processes a triggered reset;
- Step 168:: The RLC 14 is stopped before receiving a RESET ACK PDU from the second station 20;
- Step 170:: Enable the RLC entity 14 to receive RESET ACK PDUs, and enable the RLC entity 14 to transmit RESET PDUs while the RLC entity 14 is stopped;
- Step 172:: Determine if the Timer_RST timer has expired. If so, go to step 174. If not go to step 178;
- Step 174:: Since the RLC 14 is now allowed to send RESET PDUs, the RLC 14 sends a RESET PDU to the second station 20;
- Step 176:: The Timer_RST timer is restarted when the lower layers 16 indicate successful or unsuccessful transmission of the RESET PDU to the RLC 14. Go back to step 172;
- Step 178 :: Determine if the RLC 14 has received a corresponding RESET ACK PDU from the second station 20. If so, go to step 180. If not, go back to step 172; and
- Step 180:: Since the RLC 24 of the second station 20 has acknowledged the RESET PDU, the RLC 14 processes a triggered reset.

In summary, the flowchart in Fig. 5 states that the RLC entity 14 is allowed to receive RESET ACK PDUs, and allowed to transmit RESET PDUs while the RLC entity 14 is stopped. Therefore, the RLC entity 14 can use the expiration of the Timer_RST timer to generate new RESET PDUs, and also receive RESET ACK PDUs from the second station 20 in order to reset the RLC entity 14 and avoid deadlock.

The present invention provides three embodiments for resetting an RLC entity that has been stopped by an upper layer. Compared to the prior art, the present invention method can delay a triggered reset until a stopped RLC entity has been continued, restart a Timer_RST timer that expires while the RLC entity is stopped, or allow transmission and reception of RESET PDUs or RESET ACK PDUs. Thus, using any of the methods specified in the three embodiments of the present invention will prevent the RLC entity from experiencing deadlock.

Those skilled in the art will readily observe that numerous modifications and alterations of the device may be made while retaining the teachings of the invention. Accordingly, the above disclosure should be construed as limited only by the metes and bounds of the appended claims.

## Claims

1. A method for handling a triggered reset of a radio link control (RLC) entity in a wireless communications system, the method comprising:
the RLC entity initiating an RLC reset procedure by causing a reset protocol data unit (RESET PDU) to be transmitted and starting a Timer_RST timer;
an upper layer stopping the RLC entity prior to the RLC entity receiving a RESET ACK PDU in response to the reset procedure;
delaying a triggered reset of the RLC entity caused by expiration of the Timer_RST timer until after the RLC entity has been continued by the upper layer; and
the RLC entity processing the triggered reset after the RLC entity is continued by the upper layer.

2. A wireless device for implementing the method of claim 1.

3. A method for resetting a radio link control (RLC) entity in a wireless communications system, the method comprising:
the RLC entity initiating an RLC reset procedure by causing a reset protocol data unit (RESET PDU) to be transmitted and starting a Timer_RST timer;
an upper layer stopping the RLC entity prior to the RLC entity receiving a RESET ACK PDU in response to the reset procedure; and
the RLC entity restarting the Timer_RST timer if the Timer_RST timer expires while the RLC entity is stopped by the upper layer.

4. A wireless device for implementing the method of claim 3.

5. A method for resetting a radio link control (RLC) entity in a wireless communicationssystem,the method comprising:
the RLC entity initiating an RLC reset procedure by causing a reset protocol data unit (RESET PDU) to be transmitted;
an upper layer stopping the RLC entity prior to the RLC entity receiving a RESET ACK PDU in response to the reset procedure; and
enabling reception of RESET ACK PDUs while the RLC entity is stopped by the upper layer, and enabling transmission of RESET PDUs while the RLC entity is stopped by the upper layer.

6. A wireless device for implementing the method of claim 5.
